Europäisches Patentamt

**European Patent Office**

Office européen des brevets

(19)

(11) Publication number : **0 198 534**
**B1**

(12) **EUROPEAN PATENT SPECIFICATION**

(45) Date of publication of patent specification :
17.08.88

(51) Int. Cl.⁴ : **F 16 H 47/06, F 16 H 37/02**

(21) Application number : **86200526.1**

(22) Date of filing : **27.03.86**

(54) Transmission for a motor vehicle.

(30) Priority : **12.04.85 NL 8501086**

(43) Date of publication of application :
**22.10.86 Bulletin 86/43**

(45) Publication of the grant of the patent :
**17.08.88 Bulletin 88/33**

(84) Designated contracting states :
**AT CH DE FR GB IT LI NL SE**

(56) References cited :
**EP-A- 0 096 012**
**EP-A- 0 128 674**
**EP-A- 0 135 363**
**GB-A- 2 025 545**
**US-A- 4 393 731**
**PATENTS ABSTRACTS OF JAPAN, vol. 6, no. 228, (M-171) [1106], 13th November 1982**

(73) Proprietor : **Van Doorne's Transmissie B.V.**
**Dr. Hub van Doorneweg 120 Postbus 500**
**NL-5026 RA Tilburg (NL)**

(72) Inventor : **van der Veen, Siebren Carl**
**Sterrenlaan 144**
**NL-5505 AL Veldhoven (NL)**

(74) Representative : **Timmermans, Anthonius C.Th., Ir. et al**
**European Patent Attorneys Octrooibureau Zuid P.O. Box 2287**
**NL-5600 CG Eindhoven (NL)**

Jouve, 18, rue St-Denis, 75001 Paris, France

## Description

The invention relates to a transmission, intended in particular for use in a motor vehicle with front-wheel drive and having the engine mounted transversely vis-à-vis the direction of travel, provided with a hydrodynamic torque converter whose extended input shaft is connected through a first disengageable clutch to first pulley of a variable V-belt transmission and whose output shaft is connected through transmission means and a second disengageable clutch to a secondary shaft of the second pulley, which secondary shaft and associated pulley are connected through connecting means to a differential provided with two output shafts, in which set-up the torque converter, the first disengageable clutch and the primary shaft of the first pulley of the variable V-belt transmission have a common centre line and the other shafts run parallel thereto.

Such a transmission is known from the U.K. patent specification GB-2 025 545. In transmissions of this type it is necessary for the output shafts to have the same direction of rotation as the input shaft. To solve the problem, an additional shaft is inserted between the secondary shaft of the variable V-belt transmission and the differential. This, per se simple, solution has the disadvantage of increasing the over-all lenght, which is less desirable form structural considerations.

Accordingly, it is an object of the present invention to remedy this drawback while preserving the principle set out in the introduction. According to the invention, the said drawback is in essence obviated if the measures presented in claim 1 are applied.

For, through the use of a chain transmission the direction of rotation of the shafts remains the same, which is exactly what is aimed at.

The said chain transmission has a disadvantage, however, in that the transmission ratio is limited. This concerns in particular the bottom gear, in which a large transmission ratio is required for the transfer of the torque to the wheels.

It is an advantage of the present invention that this disadvantage is anticipated.

Basically, therefore, the choice is open between a coupling of the input shaft through a torque converter and the differential and a coupling through the variable V-belt transmission. The former connection will be used when a larger transmission ratio is required than is technically practicable with the variable V-belt.

The desired compact structure is accomplished when the output shaft of the second clutch forms a whole with the secondary shaft and the secondary pulley of the variable V-belt transmission and is connected to the primary sprocket wheel of the chain transmission. The second pulley of the variable transmission will follow the movements of the V-belt and the first pulley up to the first disengageable clutch without transmitting any power when the second clutch has been engaged.

The remaining claims, implicitly referred to, relate to advantages or preferred features of the invention.

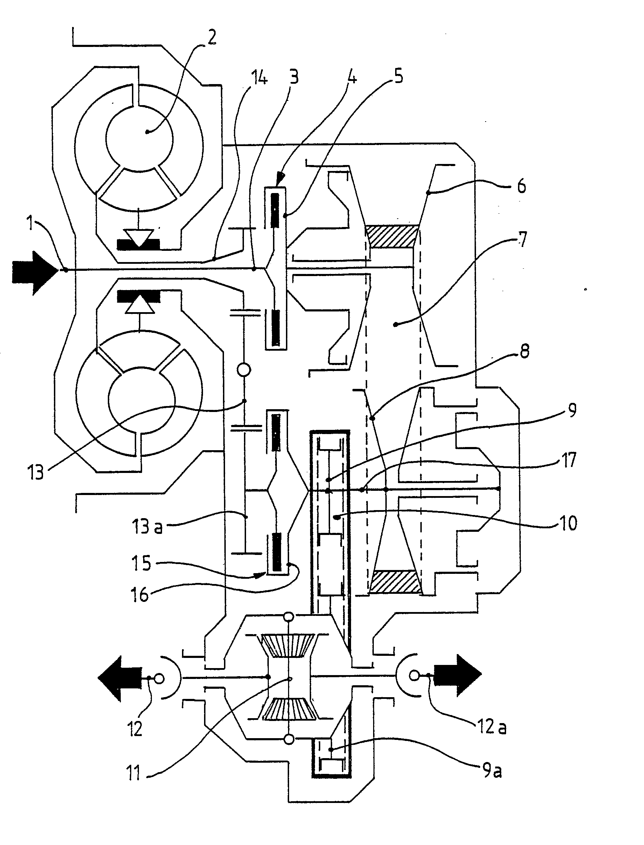

The invention will be more clearly understood from a schematic representation of the novel transmission. The figure shows the input shaft 1 of the transmission, coupled to the driving engine (not further depicted). The torque converter is denoted by 2. The extended input shaft 3 is connected to the first disengageable clutch 4, whose detachable side 5 links up with the first pulley 6 of the variable V-belt transmission with driving belt 7 and second pulley 8. This second pulley 8 is connected to a first sprocket wheel 9 which drives a second sprocket wheel 9a by means of a chain 10. The sprocket wheel 9a in its turn drives the differential 11 with two output shafts 12 and 12a.

According to the invention, the output shaft 14 of the torque converter 2 is connected through the reduction gears 13 and 13a to the disengageable second clutch 15, whose detachable side 16 forms a whole with the secondary shaft 17 of the second pulley 8 and is also connected to the first sprocket wheel 9. As appears from the drawing, the use of a chain causes less space to be occupied than in the event of reversing sheaves (66, 74) being interposed according to patent specification GB 2 025 545. The added transmission 13, 13a does not require any greater length than that of the variable V-belt transmission, when the secondary shaft of the second pulley 17 is coaxial with the shaft of the reduction gear 13a, such that the two transmission sets 6, 7, 8 and 13, 13a, 15 have been disposed parallel.

The configuration of the clutch 15 and the wheels linked up with the output shaft 14 of the torque converter 2, which are needed for reversing the direction of rotation of the secondary shaft 17, have not been represented in the drawing but they run parallel to those of the gear transmission (13, 13a, 15, 16).

In the embodiment according to the invention, the overall transmission ratio varies from about 22.5 to 1.2 depending on, respectively, the conversion ratio of the torque converter and the transmission range obtained with the two transmission sets 14, 13, 13a, 15, 16, 17 and 4, 5, 6, 7, 8, 17, respectively.

## Claims

1. A transmission for a motor vehicle with front-wheel drive and having the engine mounted transversely vis-à-vis the direction of travel, provided with a hydrodynamic torque converter (2) whose extended input shaft (3) is connected through a first disengageable clutch (4) to first pulley (6) of a variable V-belt transmission (6, 7, 8) and whose output shaft is connected through transmission means (13, 13a) and a second disengageable clutch (15), to a secondary shaft (17) of the second pulley (8), which secondary shaft and associated pulley (8) are connected through connecting means to a differential provided with two output shafts (12, 12a), in which set-up the torque converter (2), the first disengageable clutch (4) and the primary shaft of the first pulley (6) of the variable V-belt transmission have a common centre line and the other shafts (12, 12a, 17) run parallel thereto, characterized in that the connecting means represent a chain transmission (9, 9a, 10), and in that the detachable side (16) of the second clutch (15) forms a whole with the secondary shaft (17) of the variable V-belt transmission (6, 7, 8) and is connected to the primary sprocket wheel (9) of the chain transmission (9, 9a, 10).

2. A transmission according to claim 1, characterized in that the first (4) and the second disengageable clutch (15) are controlled in such a fashion that only one at a time can be engaged.

3. A transmission according to any one of claims 1-2, characterized in that the second clutch (15) is so connected to a second gear train with wheels being parallel to the gear transmission (13, 13a) and lined up with the output shaft (14) of the torque convertor (2) that the direction of rotation of the secondary shaft (17) can be reversed.

4. A transmission according to any one of claims 1-3, characterized in that the overall transmission ratio varies from 22.5 to 1.2 depending on, respectively, the conversion ratio of the torque converter (2) and the transmission range to be obtained with the two transmission sets (14, 13, 13a, 15, 16, 17 and 4, 5, 6, 7, 8, 17).

**Patentansprüche**

1. Getriebe für ein Kraftfahrzeug mit Frontantrieb und quer zur Fahrtrichtung gelegenem Motor, versehen mit einem hydrodynamischen Drehmomentwandler (2), dessen verlängerte Antriebsachse (3) über eine erste ausschaltbare Kupplung (4) mit einer ersten Riemenscheibe (6) eines variablen Treibriemengetriebes (6, 7, 8) verbunden ist und dessen Abtriebsachse über übertragungsmittel (13, 13a) und eine zweite ausschaltbare Kupplung (15) mit einer Sekundärachse (17) der zweiten Riemenscheibe (8) verbunden ist, welche Sekundärachse und zugehörige Riemenscheibe (8) über Verbindungsmittel mit einem Differentialgetriebe mit zwei Abtriebsachsen (12, 12a) verbunden sind, bei welcher Konstruktion der Drehmomentwandler (2), die erste ausschaltbare Kupplung (4) und die Primärachse der ersten Riemenscheibe (6) des variablen Treibriemengetriebes eine gemeinsame Achsenlinie haben und die anderen Achsen (12, 12a, 17) damit parallel verlaufen, dadurch gekennzeichnet, daß die Verbindungsmittel ein Kettengetriebe sind (9, 9a, 10) und die abschaltbare Seite (16) der zweiten Kupplung (15) ein Ganzes mit der Sekundärachse (17) des variablen Treibriemengetriebes (6, 7, 8) bildet und mit dem primären Kettenrad (9) des Kettengetriebes (9, 9a, 10) verbunden ist.

2. Getriebe nach Anspruch 1, dadurch gekennzeichnet, daß die erste (4) und die zweite Kupplung (15) in der Weise bedient werden, daß nur eine von beiden gekoppelt sein kann.

3. Getriebe nach Anspruch 1-2, dadurch gekennzeichnet, daß die zweite Kupplung (15) in der Weise mit einem zweiten Zahnradgetriebe mit Zahnrädern verbunden ist, welche Zahnräder parallel zu dem Zahnradgetriebe (13, 13a) verlaufen und eine Verbindung mit der Abtriebsachse (14) des Drehmomentwandlers (2) bewirken, daß die Umdrehungsrichtung der Sekundärachse (17) umgekehrt werden kann.

4. Getriebe nach jedem der Ansprüche 1-3, dadurch gekennzeichnet, daß die gesamte Übersetzung zwischen 22.5 und 1.2 liegt, je nach dem Umsetzungsverhältnis des Drehmomentwandlers (2) und nach der Übersetzung, die mit den beiden Getriebzügen (14, 13, 13a, 15, 16, 17 und 4, 5, 6, 7, 8, 17) realisiert werden können.

**Revendications**

1. Transmission pour véhicule automobile à traction avant et moteur disposé perpendiculairement au sens de la marche, munie d'un convertisseur de couple (2) dont l'arbre d'entrée (3) prolongé est relié par l'intermédiaire d'un premier accouplement débrayable (4) à la première poulie (6) d'une transmission variable à courroie (6, 7, 8), et dont l'arbre de sortie est relié par l'intermédiaire d'éléments de transmission (13, 13a) et d'un second accouplement débrayable (15) à l'arbre primaire (17) de la seconde poulie (8), lesquels arbre secondaire et poulie correspondante (8) sont raccordés par des moyens de liaison à un différentiel qui possède deux arbres de sortie (12, 12a), construction dans laquelle le convertisseur de couple (2), le premier accouplement débrayable (4) et l'arbre primaire de la première poulie (6) de la transmission variable à courroie ont un axe commun, tandis que les autres arbres (12, 12a, 17) sont alignés parallèlement à cet axe, avec la caractéristique que les moyens de liaison sont une transmission par chaîne (9, 9a, 10), et que le côté libérable (16) du second accouplement (15) forme un tout avec l'arbre secondaire (17) de la transmission variable par courroie (6, 7, 8) et est relié au pignon primaire (9) de la transmission par chaîne (9, 9a, 10).

2. Transmission selon la revendication 1, avec la caractéristique que le premier et le second accouplement débrayable (4) et (15) sont commandés de telle façon qu'un seul des deux soit en prise.

3. Transmission selon chacune des revendications 1-2, avec la caractéristique que le second accouplement est relié à une seconde transmission par engrenage avec des pignons qui sont alignés parallèlement à la transmission par engrenage (13, 13a) et procurent une liaison avec l'arbre de sortie (14) du convertisseur de couple (2) de façon telle que le sens de rotation de l'arbre secondaire (17) puisse être inversé.

4. Transmission selon chacune des revendications 1-3, avec la caractéristique que le rapport de transmission total se situe entre 22.5 et 1.2, en fonction respectivement du rapport de transmission du convertisseur de couple (2) et du rapport de transmission qui peut être obtenu avec les deux lignes de transmission (14, 13, 13a, 15, 16, 17 et 4, 5, 6, 7, 8, 17).